# EUROPEAN PATENT APPLICATION

(11) **EP 0 841 497 A2**
(43) Date of publication of application: **13.05.1998**
(21) Application number: 97308045.0
(22) Date of filing: 10.10.1997
(51) Int. Cl.: F16D 27/112

(54) **Electromagnetic clutch**

(30) Priority: 11.10.1996 JP 289330/96
(71) Applicant: ZEXEL CORPORATION, Tokyo (JP)
(72) Inventor: Okazaki, Michio, c/o Zexel Corp. Kounan-works, Kounan-machi, Oosato-gun, Saitama-ken (JP)
(74) Representative: Britter, Keith Palmer

(57) **Abstract**

A electromagnetic clutch (1) comprises a hub (10) rigidly fitted on a drive shaft (2) and having a flange portion (11), a rotor (20) which is rotatable about the drive shaft (2), a magnetic coil (21) arranged in the rotor (20), an armature plate (30) which is magnetically attracted into abutment with the rotor (20) upon energisation of the magnetic coil (21), and a plurality of spring members (40) interposed between the hub flange portion (11) and the armature plate (30) along a circumference of the rotor (20), for connection between the flange portion (11) and the armature plate (30). The armature plate (30) comprises a first annular disc (30a axially opposed to the rotor (20) with a predetermined axial gap therebetween, a second annular disc (30b) connected to the first annular disc (30a) in a manner axially opposed thereto with a predetermined space (30x) formed therebetween, and at least one elastic body (30c) held in the predetermined space (30x) between the first annular disc (30a) and the second annular disc (30b).

## Description

### BACKGROUND OF THE INVENTION

### Field of the Invention

This invention relates to an electromagnetic clutch, and more particularly to an electromagnetic clutch for transmitting driving force from a drive source to a drive shaft of a refrigerant compressor.

### Description of the Prior Art

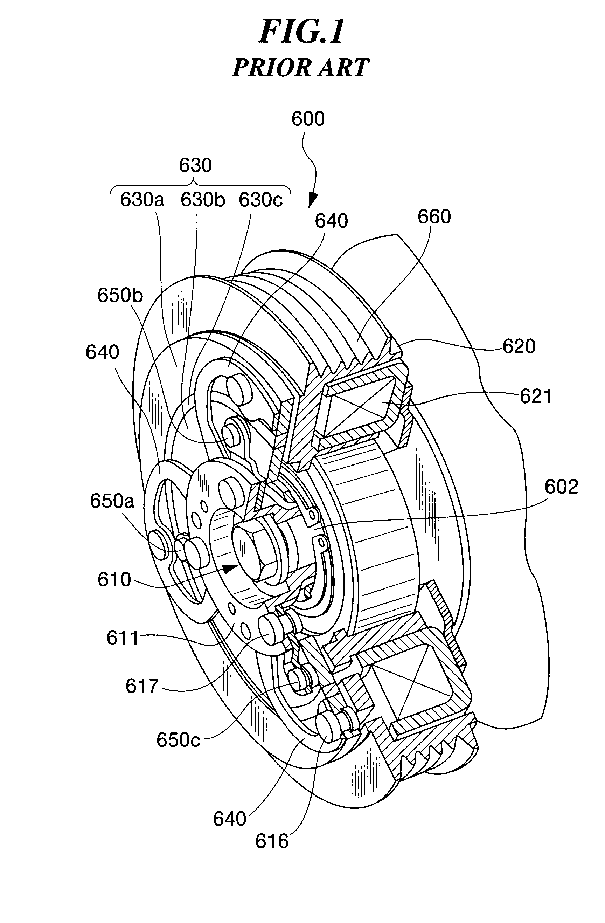

FIG. 1 is aperspective view, partly in section, showing a conventional electromagnetic clutch.

The electromagnetic clutch 600 includes a hub 610 having a flange portion 611 and rigidly fitted on a drive shaft 602 of a refrigerant compressor, a rotor 620 driven by torque from an engine (not shown) for rotation about the drive shaft 602, an armature plate 630 which is magnetically attracted into abutment with the rotor 620 when a magnetic coil 621 arranged in the rotor 620 is energized, and three leaf springs 640 interposed between the flange portion 611 of the hub 610 and the armature plate 630 for returning the armature plate 630 to its off position when the magnetic coil 621 is deenergized. The armature plate 630 is comprised of an outer disk 630a and an inner disk 630b joined to an inner periphery of the outer disk 630a via a jointing metal 630c.

The rotor 620 has a pulley groove 660 circumferentially formed in its outer peripheral surface, and a V-belt, not shown, extends around the pulley groove 660 for connecting the rotor 620 to a crankshaft of the engine, not shown.

Rubber stoppers 650a, 650b and 650c are provided respectively between the leaf springs 640 and the armature plate 630 such that they have preloads which prevent rattle.

When the magnetic coil 621 is not energized, the leaf springs 640 having resilient properties holds the armature plate 630 in its off position at a predetermined distance from a friction surface of the rotor 620, whereby driving force of the engine is inhibited from being transmitted to the refrigerant compressor, and hence the rotor 620 rotates in a disconnected state or idles.

On the other hand, when the magnetic coil 621 is energized for generation of electromagnetic force, the armature plate 630 is magnetically attracted into abutment with the friction surface of the rotor 620 against the pulling or returning force of the leaf springs 640, whereby the driving force from the engine is transmitted to the drive shaft 602 of the refrigerant compressor.

According to the above conventional electromagnetic clutch, the armature plate 630 and the leaf springs 640 are united by rivets 616, 617.

Therefore, when the armature plate 630 is magnetically attracted into abutment with the rotor 620 upon energization of the magnetic coil 621, vibrations generated by a collision between the armature plate 630 and the rotor 620 are transmitted to the leaf springs 640 to produce a noise (hereinafter referred to as "the attraction noise").

### SUMMARY OF THE INVENTION

It is an object of the invention to provide an electromagnetic clutch which is capable of reducing the attraction noise produced when an armature plate is magnetically attracted into abutment with a rotor.

To attain the above object, according to a first aspect of the invention, there is provided an electromagnetic clutch including a hub rigidly fitted on a drive shaft and having a flange portion, a rotor which is rotatable about the drive shaft, a magnetic coil arranged in the rotor, an armature plate which is magnetically attracted into abutment with the rotor when the magnetic coil is energized, and a plurality of spring members interposed between the flange portion of the hub and the armature plate along a circumference of the rotor, for connection between the flange portion and the armature plate.

The electromagnetic clutch according to this first aspect of the invention is characterised in that the armature plate comprises:
a first disk;
a second disk connected to the first disk in a manner to define a space therebetween; and
at least one elastic body held in the space between the first disk and the second disk.

According to this electromagnetic clutch, vibrations generated by a collision between the armature plate and the rotor when the armature plate is magnetically attracted into abutment with the rotor are absorbed by the at least one elastic body held between the first disk and the second disk, so that any consequential vibrations transmitted to the spring members are damped, whereby the attraction noise resulting from energization of the rotor can be reduced.

To attain the above object, according to a second aspect of the invention, there is provided an electromagnetic clutch including a hub rigidly fitted on a drive shaft, the hub having a flange portion, a rotor which rotates about the drive shaft, a magnetic coil arranged in the rotor, an armature plate which is magnetically attracted into abutment with the rotor when the magnetic coil is energized, and a plurality of spring members interposed between the flange portion of the hub and the armature plate along a circumference of the rotor, for connection between the flange portion and the armature plate.

The electromagnetic clutch according to the second aspect of the invention is characterized in that the armature plate comprises:
a first annular disk axially opposed to the rotor with a predetermined axial gap therebetween,
a second annular disk connected to the first annular disk in a manner axially opposed thereto with a predetermined space formed therebetween, and
at least one elastic body held in the predetermined space between the first annular disk and the second annular disk.

According to this electromagnetic clutch, vibrations generated by a collision between the armature plate and the rotor when the armature plate is magnetically attracted into abutment with the rotor are absorbed by the at least one elastic body held between the first annular disk and the second annular disk, so that the vibrations transmitted to the spring members via the second annular disk are damped, whereby the attraction noise resulting from energization of the rotor can be reduced.

Preferably, the first annular disk comprises an outer disk, and an inner disk arranged radially inward of the outer disk with a predetermined radial gap therebetween, the at least one elastic body being held only between the second annular disk and the outer disk of the first annular disk.

According to the preferred embodiment, since it suffices to provide the at least one elastic body only between the second annular disk and the outer disk, material costs and time for machining can be reduced, which contributes to reduction of manufacturing costs of the electromagnetic clutch.

Preferably, the second annular disk has at least one recess formed therein each for accommodating a portion of a corresponding one of the at least one elastic body.

According to the preferred embodiment, it is possible to hold the elastic body more securely between the first annular disk and the second annular disk.

More preferably, the at least one recess of the second annular disk has a concave shape, and the portion of the corresponding one of the at least one elastic body has a convex shape.

According to the preferred embodiment, it is possible to hold the at least one elastic body still more securely between the first annular disk and the second annular disk.

Preferably, the at least one elastic body each has at least one groove formed in a surface thereof for being brought into urging contact with the first annular disk.

According to the preferred embodiment, the at least one elastic body each has an increased surface area for being brought into contact with the first annular disk. Therefore, it is possible to hold the at least one elastic body more securely between the first annular disk and the second annular disk.

Preferably, the first annular disk has projections formed on a second annular disk-side surface thereof, for providing the predetermined space between the first annular disk and the second annular disk.

More preferably, the projections define therein through holes, respectively, which extend axially, the first annular disk and the second annular disk being connected by a plurality of rivets, the rivets extending through the through holes of the projections, respectively.

For example, the at least one elastic body is formed of rubber.

To attain the above object, according to a third aspect of the invention, there is provided an electromagnetic clutch which is characterized in that the armature plate comprises:
an outer disk;
an inner disk arranged radially inward of the outer disk;
a plurality of connecting members for connecting a side of the outer disk remote from the rotor and a side of the inner disk remote from the rotor; and
an elastic body held between an inner peripheral surface of the outer disk and an outer peripheral surface of the inner disk.

According to this electromagnetic clutch, vibrations generated by a collision between the armature plate and the rotor when the outer and inner disks are magnetically attracted into abutment with the rotor are absorbed by the elastic body held between the inner peripheral surface of the outer disk and the outer peripheral surface of the inner disk, so that the vibrations transmitted to the spring members via the outer and inner disks are damped, whereby the attraction noise resulting from energization of the magnetic coil can be reduced.

Preferably, each of the connecting members comprises a plate member, and rivets connecting the plate member to the outer disk and the inner disk, respectively.

Preferably, each of the connecting members comprises a portion of each of the spring members, and rivets connecting the portion of the each of the spring members to the outer disk and the inner disk, respectively.

Preferably, at least one of the inner peripheral surface of the outer disk and the outer peripheral surface of the inner disk has a circumferential groove formed therein.

Preferably, the elastic body is held in a compressed state.

More preferably, the elastic body is formed of rubber.

The above and other objects, features and advantages of the present invention will become more apparent from the following detailed description taken in conjunction with accompanying drawings.

### BRIEF DESCRIPTION OF THE DRAWINGS

FIG. 1 is a perspective view, partly in section, of a conventional electromagnetic clutch;
FIG. 2 is a longitudinal cross-sectional view showing the arrangement of an electromagnetic clutch according to a first embodiment of the invention;
FIG. 3 is a plan view of an armature plate of the FIG. 2 electromagnetic clutch;
FIG. 4 is a cross-sectional view taken on line IV-IV of FIG. 3;
FIGS. 5A to 5C are enlarged sectional views showing elastic bodies according to respective variations of the first embodiment;
FIG. 6 is a plan view of an armature plate according to a second embodiment of the invention;
FIG. 7 is a cross-sectional view taken on line VII-VII of FIG. 6;
FIG. 8 is a cross-sectional view taken on line VIII-VIII of FIG. 6;
FIG. 9 is a plan view of an armature plate of an electromagnetic clutch according to a third embodiment of the invention;
FIG. 10 is a cross-sectional view taken on line X-X of FIG. 9.
FIG. 11 is a plan view of an armature plate of an electromagnetic clutch according to a fourth embodiment of the invention; and
FIG. 12 is a cross-sectional view taken on line XII-XII of FIG. 11.

### DETAILED DESCRIPTION OF THE PREFERRED EMBODIMENTS

The invention will now be described in detail with reference to drawings showing preferred embodiments thereof.

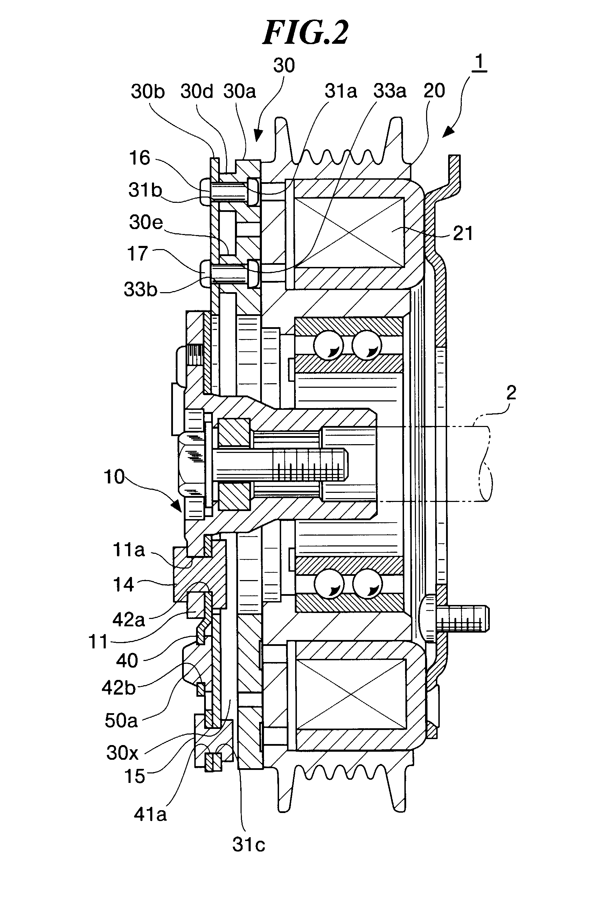

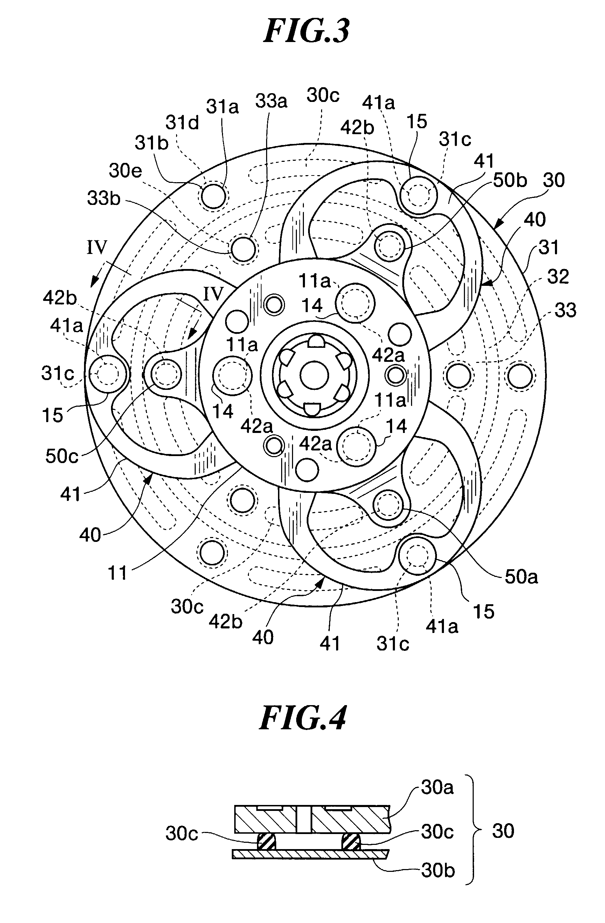

FIG. 2 is a longitudinal cross-sectional view showing the arrangement of an electromagnetic clutch according to a first embodiment of the invention. FIG. 3 is a plan view of an armature plate of the FIG. 2 electromagnetic clutch, and FIG. 4 a cross-sectional view taken on line IV-IV of FIG. 3.

The electromagnetic clutch 1 includes a hub 10 having a flange portion 11 and rigidly fitted on a drive shaft 2 of a refrigerant compressor, a rotor 20 driven by torque from an engine (not shown) for rotation about the drive shaft 2, an armature plate 30 which is magnetically attracted into abutment with the rotor 20 when a magnetic coil 21 arranged within the rotor 20 is energized, and three leaf springs 40 interposed between the flange portion 11 of the hub 10 and the armature plate 30 for returning the armature plate 30 to its off position when the magnetic coil 21 is deenergized.

The armature plate 30 is comprised of a first annular disk 30a axially opposed to the rotor 20 with a predetermined axial gap therebetween, a second annular disk 30b connected to the first annular disk 30a in a manner spaced therefrom by a predetermined distance to form a predetermined space 30x between the first and second annular disks, and a plurality of elastic bodies 30c held between the first annular disk 30a and the second annular disk 30b.

The first annular disk 30a, which is comprised of an outer disk 31, and an inner disk 33 arranged radially inward of the outer disk 31 with a radial gap 32 therebetween, is arranged in a manner axially opposed to the rotor 20. The outer disk 31 and the inner disk 33 have through holes 31a and through holes 33a axially formed therethrough, respectively, at angular intervals of 120 degrees about the rotation axis of the electromagnetic clutch (i.e. the common rotation axis of the outer and inner disks 31 and 33).

Further, the first annular disk 30a has recesses each formed at a rotor-side end of each through hole 31a or 33a for accommodating a head of each rivet 16, 17, referred to hereinafter, such that the first annular disk 30a can be brought into surface contact with an end face of the rotor 20 when the armature plate 30 is magnetically attracted into abutment with the rotor 20 (see FIG. 2).

The second annular disk 30b, which has approximately the same radial width as that of the first annular disk 30a (including the outer disk 31, the radial gap 32, and the inner disk 33) , is arranged in a manner axially opposed to the first annular disk 30a.

Further, the second annular disk 30b is formed with through holes 31b corresponding respectively to the through holes 31a of the outer disk 31 and through holes 33b corresponding respectively to the through holes 33a of the inner disk 33. The through holes 31b and the through holes 33b are axially formed at respective angular intervals of 120 degrees about the rotation axis of the electromagnetic clutch (i.e. the rotation axis of the second annular disk 30b) . Further, the second annular disk 30b has through holes 31c axially formed therethrough at angular intervals of 120 degrees about the rotation axis thereof . The through holes 31c and the through holes 31b are alternately formed on an identical circumferential line at angular intervals of 60 degrees about the rotation axis of the second annular disk 30b.

The first annular disk 30a has projections 30d and 30e formed on a second annular disk-side surface thereof at respective locations corresponding to the through holes 31b and 33b. The projections 30d and 30e each define therein a through hole continuous with a corresponding one of the through holes 31a and 33a in a manner concentric with a corresponding one of the through holes 31b and 33b of the second annular disk 30b.

Although in the present embodiment the projections 30d, 30e are provided on the first annular disk 30a, this is not limitative, but a washer or the like may be interposed between the first annular disk 30a and the second annular disk 30b.

The elastic bodies 30c, each of which is formed e.g. of rubber and has a shape rectangular in cross section, are bonded to the second annular disk 30b e.g. by an adhesive. Each elastic body 30c is slightly larger in axial size than the predetermined distance between the first annular disk 30a and the second annular disk 30b. The elastic bodies 30c are each held in a compressed state between the first and second annular disks 30a and 30b which are secured to each other by the rivets 16, 17, whereby the predetermined distance is maintained between the two disks 30a and 30b.

The three leaf springs (spring members) 40 each include an annular portion 41 having a generally circular periphery. The annular portion 41 has three through holes 41a, 42a, and 42b axially formed therethrough in a manner radially aligned to the rotation axis of the electromagnetic clutch.

The flange portion 11 of the hub 10 is generally circular in outer shape and has through holes lla axially formed therethrough on an identical circumferential line at angular intervals of 120 degrees about the longitudinal or rotation axis of the drive shaft 2 (i.e. the rotation axis of the electromagnetic clutch).

The leaf springs 40 and the flange portion 11 are connected by rivets 14 extending respectively through corresponding ones of the through holes 42a of the leaf springs 40 and corresponding ones of the through holes lla of the flange portion 11, whereby portions of the leaf springs 40 are fixed to the bottom or the rotor-side surface of the flange portion 11. Thus, the leaf springs 40 and the flange portion 11 are united.

The leaf springs 40 and the second annular disk 30b are connected by rivets 15 extending respectively through corresponding ones of the through holes 41a of the leaf springs 40 and corresponding ones of the through holes 31c of the second annular disk 30b, which correspond in location to the outer disk 31 of the first annular disk 30a, whereby portions of the leaf spring 40 are fixed to the top or spring-side surface of the second annular disk 30b. Thus, the leaf springs 40 and the second annular disk 30b are united.

Rubber stoppers 50a to 50c are press-fitted into the through holes 42b of the leaf springs 40, respectively. The rubber stoppers 50a to 50c are in urging contact at respective one ends thereof with the top or spring-side surface of the second annular disk 30b such that they have preloads which prevent rattle from occurring between the armature plate 30 and the leaf springs 40.

Further, the first annular disk 30a and the second annular disk 30b are connected by the aforementioned rivets 16 extending through corresponding ones of the through hole 31a of the outer disk 31, corresponding ones of the through holes of the projections 30d, and corresponding ones of the through holes 31b of the second annular disk 30b, and the aforementioned rivets 17 extending through corresponding ones of the through holes 33a of the inner disk 33, corresponding ones of the through holes of the projections 30e, and corresponding ones of the through holes 33b of the second annular disk, whereby the first annular disk 30a and the second annular disk 30b are secured to each other in a manner spaced from each other by the predetermined distance, forming the predetermined space 30x therebetween. Thus, the first annular disk 30a and the second annular disk 30b are united.

According to the above construction of the electromagnetic clutch of the present embodiment, when the armature plate 30 is magnetically attracted into abutment with the rotor 20 upon energization of the magnetic coil 21, the first annular disk 30a collides with the rotor 20 to produce vibrations. These vibrations are absorbed by the elastic bodies 30c held in the compressed state between the first annular disk 30a and the second annular disk 30b. Therefore, the vibrations to be transmitted to the leaf springs 40 via the second annular disk 30b are damped, so that the attraction noise resulting from energization of the magnetic coil 21 is reduced.

The armature plate 30 is constructed as a double disk device in such a manner that the outer and inner disks 31, 33 of the first annular disk 30a are secured to the second annular disk 30b by the rivets 16 and 17, respectively, so that magnetic flux is prevented from leaking via the rotor 20 and the armature plate 30, which improves the attraction efficiency of the electromagnetic clutch.

FIGS. 5A to 5C are enlarged sectional views of elastic bodies according to respective variations of the first embodiment.

FIG. 5A shows elastic bodies 330c each formed of rubber and has a shape circular in cross section.

A second annular disk 330b is formed with concave portions 330g each for accommodating a portion of each elastic body 330c.

The elastic bodies 330c are bonded to the concave portions 330g, respectively, by an adhesive. According to the present variation, it is possible to hold the elastic bodies 330c between the two disks 30a and 330b more securely than in the first embodiment.

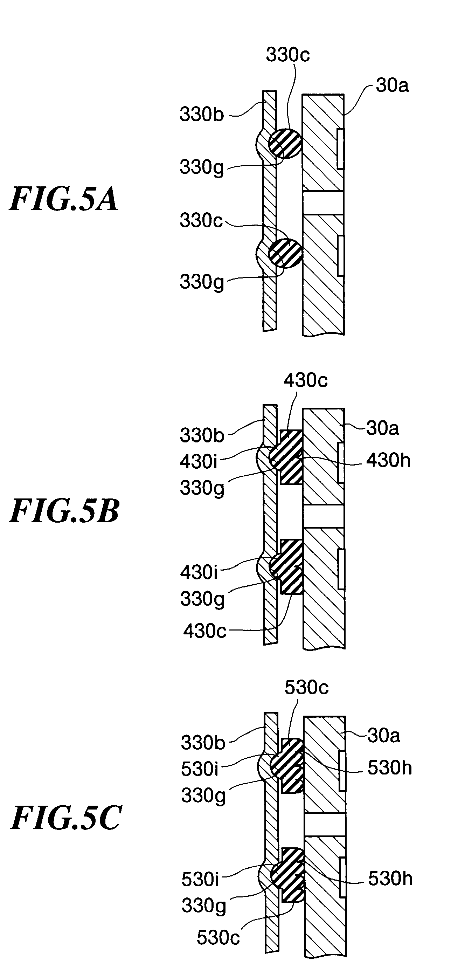

Each elastic body 430c in FIG. 5B has a groove 430h formed in a surface thereof in contact with the first annular disk 30a as well as a convex portion 430i formed on a surface thereof in contact with the second annular disk 330b. The convex portion 430i of the elastic body 430c is fitted in the concave portion 330g of the second annular disk 330b.

Each elastic body 530c in FIG. 5C has a plurality of grooves 530h formed in a surface thereof in contact with the first annular disk 30a as well as a convex portion 530i formed on a surface thereof in contact with the second annular disk 30b. The convex portion 530i of the elastic body 530c is fitted in the concave portion 330g of the second annular disk 330b.

According to the variation shown in FIG. 5C, the elastic body 530c has a larger surface area brought into contact with the first annular disk 30a than the elastic body 330c in FIG. 5A and the elastic body 430c in FIG. 5B. Therefore, it is possible to hold the elastic bodies 530c more securely between the first and second annular disks 30a and 330b.

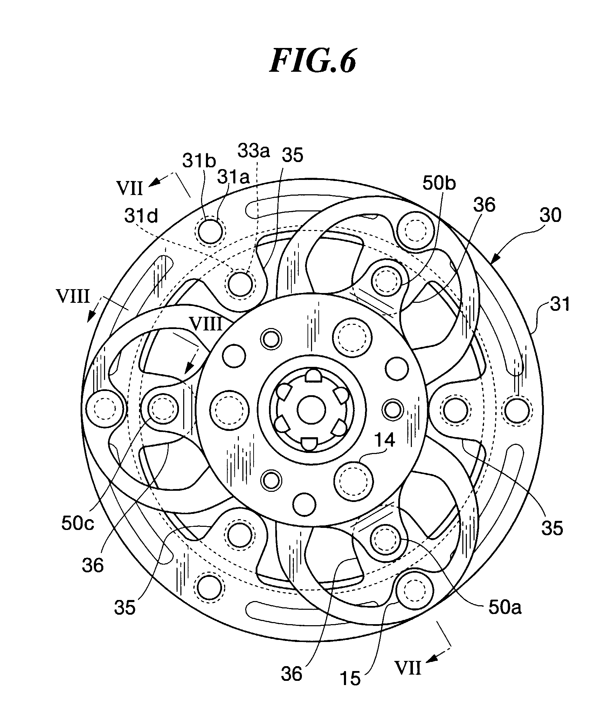

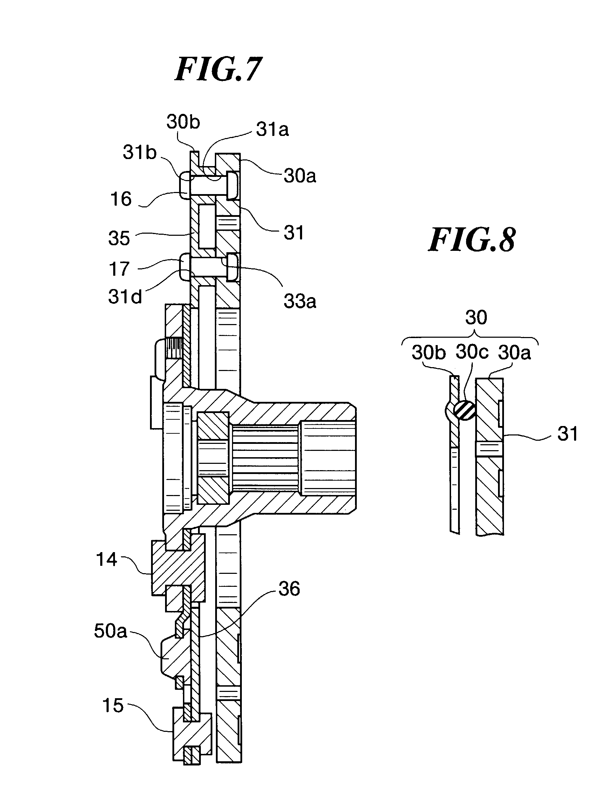

FIG. 6 is a plan view of an armature plate of an electromagnetic clutch according to a second embodiment of the invention. FIG. 7 is a view taken on line VII-VII of FIG. 6, and FIG. 8 a view taken on line VIII-VIII of the same. Component parts and elements corresponding to those of the first embodiment are designated by identical reference numerals, and detailed description thereof is omitted.

The second embodiment is distinguished from the first embodiment in that the shape of the second annular disk 30b is modified such that the elastic bodies 30c are held only between the second annular disk 30b and the outer disk 31 of the first annular disk 30a, and hence no elastic body 30c is provided between the second annular disk 30b and the inner disk 33 of the first annular disk 30a.

The outer disk 31 has three tongues 35 formed therewith in a manner each projecting radially inward from an inner periphery of the outer disk 31 at angular intervals of 120 degrees about the rotation axis of the same. Each tongue 35 has a through hole 31d axially formed therethrough. The first annular disk 30a and the second annular disk 30b are connected by rivets 16 extending through corresponding ones of the through holes 31a of the outer disk 31 and corresponding ones of the through holes 31b of the second annular disk 30b, and rivets 17 extending through corresponding ones of the through holes 33a of the inner disk 33 and corresponding ones of the through holes 31d of the second annular disk 30b, whereby the first annular disk 30a and the second annular disk 30b are secured to each other in a manner spaced from each other by the predetermined distance. Thus, the first annular disk 30a and the second annular disk 30b are united.

Further, the outer disk 31 has three tongues 36 formed therewith at locations opposed to rubber stoppers 50a to 50c, respectively, in a manner each projecting radially inward from the inner periphery of the outer disk 31 at angular intervals of 120 degrees about the rotation axis of the outer disk 31, for receiving the rubber stoppers 50a to 50c.

According to the second embodiment, since the elastic bodies 30c are arranged only between the second annular disk 30b and the outer disk 31 of the first annular disk 30a, material costs and time for machining can be reduced in comparison with the first embodiment, which contributes to reduction of manufacturing costs of the electromagnetic clutch.

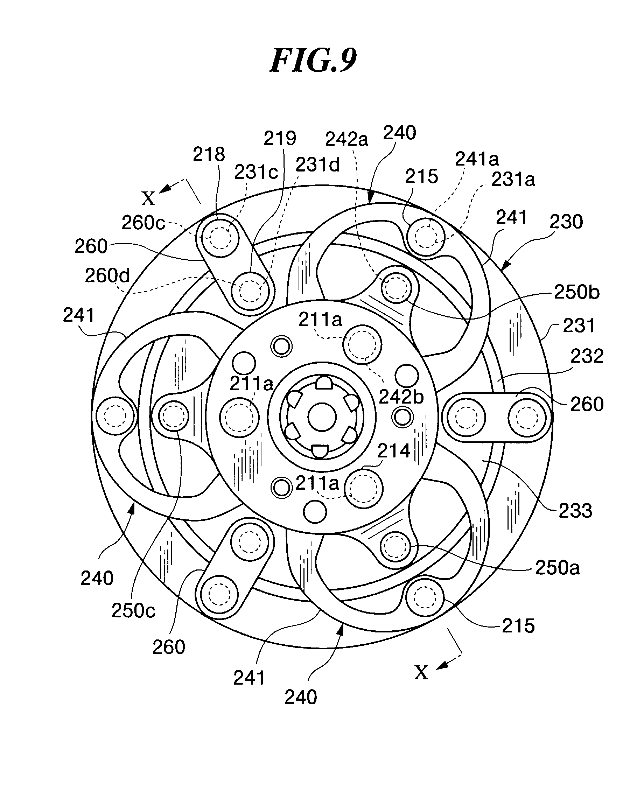

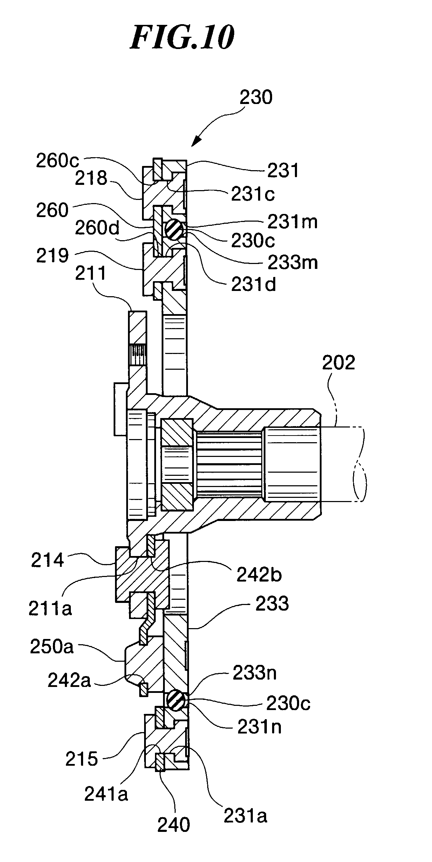

FIG. 9 is a plan view of an armature plate of an electromagnetic clutch according to a third embodiment of the invention, and FIG. 10 a view taken on line X-X of FIG. 9.

The armature plate 230, which is made e.g. of low carbon steel, is comprised of an outer disk 231 and an inner disk 233 arranged radially inward of the outer disk 231 with a radial gap 232 therebetween.

The outer disk 231 has through holes 231a axially formed therethrough at angular intervals of 120 degrees about the rotation axis thereof. Further, the outer disk 231 and the inner disk 233 have through holes 231c and through holes 231d axially formed therethrough, respectively, at angular intervals of 120 degrees about the common rotation axis thereof. The through holes 231a and 231c of the outer disk 231 are alternately formed on an identical circumferential line at angular intervals of 60 degrees about the above common rotation axis.

An elastic body 230c is held in a compressed state between an inner peripheral surface 231m of the outer disk 231 and an outer peripheral surface 233m of the inner disk 233. The inner peripheral surface 231m of the outer disk 231 and the outer peripheral surface 233m of the inner disk 233 have grooves 231n and 233n each semi-circular in cross section for accommodating respective portions of the elastic body 230c.

Three leaf springs 240 are each formed e.g. of low carbon steel, and each have an annular portion 241 with a generally circular periphery. The annular portion 241 has three through holes 241a, 242a, and 242b axially formed therethrough in a manner radially aligned to the rotation axis of the electromagnetic clutch.

A flange portion 211 of the hub rigidly fitted on a drive shaft 202 is generally circular in outer shape and has through hples 211a axially formed therethrough on an identical circumferential line at angular intervals of 120 degrees about the longitudinal or rotation axis of the drive shaft (i.e. the rotation axis of the electromagnetic clutch).

The leaf springs 240 and the flange portion 211 are connected by rivets 214 extending respectively through corresponding ones of the through hole 242b of the leaf springs 240 and corresponding ones of the through holes 211a of the flange portion 211, whereby portions of the leaf springs 240 are fixed to the bottom or the rotor-side surface of the flange portion 211. Thus, the leaf springs 240 and the flange portion 211 are united.

The leaf springs 240 and the outer disk 231 are connected by rivets 215 extending respectively through corresponding ones of the through holes 241a of the leaf springs 240 and corresponding ones of the through holes 231a of the outer disk 231, whereby portions of the leaf springs 240 are fixed to the top or spring-side surface of the outer disk 231.

Rubber stoppers 250a to 250c are press-fitted into the through holes 242a of the leaf springs 240, respectively. The rubber stoppers 50a to 50c are in urging contact at respective one ends thereof with the top or spring-side surface of the inner disk 233 such that they have preloads which prevent rattle from occurring between the armature plate 230 and the leaf springs 240.

Each of three connecting members 260 has a generally elliptical shape and through holes 260c and 260d axially formed therethrough. The outer disk 231 and the inner disk 233 are connected by the connecting members 260 each fixed thereto from a side thereof remote from the rotor by a rivet 218 extending through the through hole 260c and a corresponding one of the through holes 231c of the outer disk 231, and a rivet 219 extending through the through hole 260d and a corresponding one of the through holes 231d of the outer disk 231. Thus, the outer disk 231 and the inner disk are united.

According to the third embodiment, vibrations caused by a collision between the armature plate and the rotor occurring when the armature plate including the outer and inner disks is magnetically attracted into abutment with the rotor upon energization of the magnetic coil are absorbed by the elastic body held in the compressed state between the inner peripheral surface of the outer disk and the outer peripheral surface of the inner disk, so that the attraction noise can be reduced.

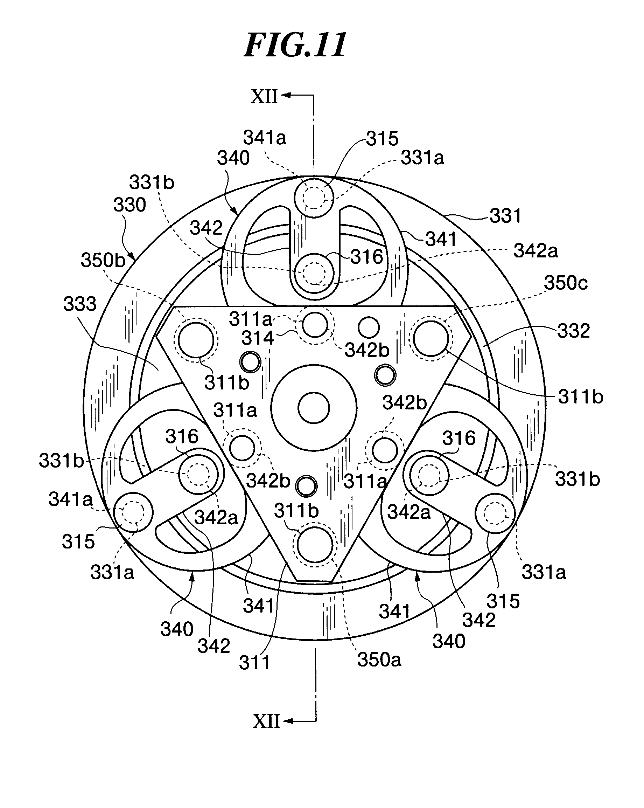

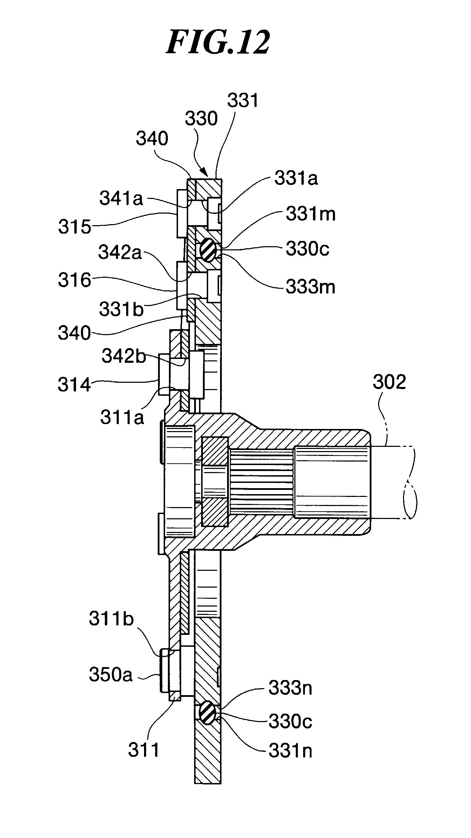

FIG. 11 is a plan view of an armature plate of an electromagnetic clutch according to a fourth embodiment of the invention. FIG. 12 is a view taken on line XII-XII of FIG. 11.

The armature plate 330, which is made e.g. of low carbon steel, is comprised of an outer disk 331, and an inner disk 333 arranged radially inward of the outer disk 331 with a radial gap 332 therebetween.

The outer disk 331 and the inner disk 333 have through holes 331a and through holes 331b formed therethrough, respectively, at angular intervals of 120 degrees about the common rotation axis thereof.

An elastic body 330c is held in a compressed state between an inner peripheral surface 331m of the outer disk 331 and an outer peripheral surface 333m of the inner disk 333. The inner peripheral surface 331m of the outer disk 331 and the outer peripheral surface 333m of the inner disk 333 have grooves 331n and 333n formed therein for accommodating respective portions of the elastic body 330c.

Each of three leaf springs 340 is made e.g. of low carbon steel and has an annular portion 341 having a generally circular periphery and a tongue 342 (connecting member for connecting a side of the outer disk 331 remote from the rotor and a side of the inner disk 333 remote from the rotor) projecting radially inward from a radially outer portion of the annular portion 341. The annular portion 341 has three through holes 341a, 342a, and 342b axially formed therethrough in a manner radially aligned to the rotation axis of the electromagnetic clutch.

A flange portion 311 of the hub rigidly fitted on a drive shaft 302 is generally triangular in outer shape, and has through holes 311a axially formed therethrough on an identical circumferential line at angular intervals of 120 degrees about the longitudinal or rotation axis of the drive shaft 302 (i.e. the rotation axis of the electromagnetic clutch).

Further, the flange portion 311 has through holes 311b axially formed therethrough at respective corners thereof.

The leaf springs 340 and the flange portion 311 are connected by rivets 314 extending respectively through corresponding ones of the through holes 342b of the leaf springs 340 and corresponding ones of the through holes 311a of the flange portion 311, whereby portions of the leaf spring 340 are fixed to the bottom or rotor side of the flange portion 311. Thus, the leaf springs 340 and the flange portion 311 are united.

The leaf springs 340 and the outer disk 331 of the armature plate 330 are connected by rivets 315 extending respectively through corresponding ones of the through holes 331a of the outer disk 331 and corresponding ones of the through holes 341a of the leaf springs 340, whereby portions of the leaf springs 340 are fixed to the top or spring-side surface of the outer disk 331 (side of the outer disk 331 remote from the rotor).

Further, the leaf springs 340 and the inner disk 333 of the armature plate 330 are connected by rivets 316 extending respectively through corresponding ones of the through holes 331b of the inner disk 333 and corresponding ones of the through holes 342a of the leaf springs 340, whereby portions of the leaf springs 340 are fixed to the top or spring-side surface of the inner disk 333 (side of the outer disk 333 remote from the rotor).

Thus, the armature plate 330 and the leaf springs 340 are united.

Rubber stoppers 350a to 350c are press-fitted into the through holes 311b of the flange portion 311, respectively. The rubber stoppers 350a to 350c are in urging contact at respective one ends thereof with the armature plate 330 such that the rubber stoppers 350a to 350c have preloads which prevent rattle from occurring between the flange portion 311 and the armature plate 330.

The electromagnetic clutch according to the fourth embodiment provides the same effects as obtained by the electromagnetic clutch according to the third embodiment.

Although in the above third and fourth embodiments, the grooves 231n and 233n (or 331n and 333n) each have a semi-circular shape in'cross section, this is not limitative, but they may have shapes triangular in cross section. Further, the grooves 231n and 233n (or 331n and 333n) are not necessarily required to be formed in both of the inner peripheral surface 231m (or 331m) of the outer disk 231 (or 331) and the outer peripheral surface 233m (or 333m) of the inner disk 231 (or 331), respectively, but it suffices to form a groove in at least one of the inner peripheral surface 231m (or 331m) of the outer disk 231 (or 331) and the outer peripheral surface 233m (or 333m) of the inner disk 231 (or 331).

It is further understood by those skilled in the art that the foregoing are preferred embodiments of the invention, and that various changes and modification may be made without departing from the spirit and scope thereof.

## Claims

1. An electromagnetic clutch (1) comprising a hub (10) rigidly fitted on a drive shaft (2) and having a flange portion (11), a rotor (20) which is rotatable about the drive shaft (2), a magnetic coil (21) arranged in the rotor (20), an armature plate (30) which is magnetically attracted into abutment with the rotor (20) when the magnetic coil (21) is energised, and a plurality of spring members (40) interposed between the flange portion (11) of the hub (10) and the armature plate (30) along a circumference of the rotor (20), for connection between the flange portion (11) and the armature plate (30),
characterised in that the armature plate (30) comprises:
a first disc (30a, 31, 231, 331);
a second disc (30b, 33, 233, 333) connected to the first (30a, 31, 231, 331) in a manner to define a space (30x, 232, 332) therebetween; and
at least one elastic body (30c, 230c, 330c) held in the space (30x, 232, 332) between the first disc (30a, 31, 231, 331) and the second disc (30b, 33, 233, 333).

2. An electromagnetic clutch (1) comprising a hub (10) rigidly fitted on a drive shaft (2) and having a flange portion (11), a rotor (20) which is rotatable about the drive shaft (2), a magnetic coil (21) arranged in the rotor (20), an armature plate (30) which is magnetically attracted into abutment with the rotor (20) when the magnetic coil (21) is energised, and a plurality of spring members (40) interposed between the flange portion (11) of the hub (10) and the armature plate (30) along a circumference of the rotor (20), for connection between the flange portion (11) and the armature plate (30),
characterised in that the armature plate (30) comprises:
a first annular disc (30a) axially opposed to the rotor (20) with a predetermined axial gap therebetween;
a second annular disc (30b) connected to the first annular disc (30a) in a manner axially opposed thereto with a predetermined space (30x) formed therebetween; and
at least one elastic body (30c) held in said predetermined space (30x) between the first annular disc (30a) and the second annular disc (30b).

3. An electromagnetic clutch (1) according to claim 2, wherein the first annular disc (30a) comprises an outer disc (31) and an inner disc (33) arranged radially inwardly of the outer disc (31) with a predetermined radial gap (32) therebetween, said at least one elastic body (30c) being held only between the second annular disc (30b) and the outer disc (31) of the first annular disc (30a).

4. An electromagnetic clutch (1) according to claim 2 or 3, wherein the second annular disc (330b) has at least one recess (330g) formed therein for accommodating a portion (430i, 530i) of a corresponding one of said at least one elastic body (330c, 430c, 530c).

5. An electromagnetic clutch (1) according to claim 4, wherein said at least one recess (330g) of the second annular disc (330b) has a concave shape, the portion (430i, 530i) of the corresponding one of said at least one elastic body (330c, 430c, 530c) having a convex shape.

6. An electromagnetic clutch according to any of claims 2 to 5, wherein said at least one elastic body (430c, 530c) has at least one groove (430h, 530h) formed in a surface thereof for being brought into urging contact with the first annular disc (30a).

7. An electromagnetic clutch according to any of claims 2 to 6, wherein the first annular disc (30a) has projections (30d, 30e) formed on a second annular disc-side surface thereof, for providing the predetermined space (30x) between the first annular disc (30a) and the second annular disc (30b).

8. An electromagnetic clutch according to claim 7, wherein the projections (30d, 30e) define therein through holes (31a, 33a), respectively, which extend axially, the first annular disc (30a) and the second annular disc (30b) being connected by a plurality of rivets (16, 17) which extend through respective ones of the through holes (31a, 33a) of the projections (30d, 30e).

9. An electromagnetic clutch (1) according to any preceding claim, wherein said at least one elastic body (30c, 330c, 430c, 530c) is formed of rubber.

10. An electromagnetic clutch (1) comprising a hub (10) rigidly fitted on a drive shaft (2) and having a flange portion (11), a rotor (20) which is rotatable about the drive shaft (2), a magnetic coil (21) arranged in the rotor (20), an armature plate (30) which is magnetically attracted into abutment with the rotor (20) when the magnetic coil (21) is energized, and a plurality of spring members (40) interposed between the flange portion (11) of the hub (10) and the armature plate (30) along a circumference of the rotor (20), for connection between the flange portion (11) and the armature plate (30),
characterised in that the armature plate (30, 230, 330) comprises:
an outer disc (31, 231, 331);
an inner disc (33, 233, 333) arranged radially inwardly of the outer disc (31, 231, 331)
a plurality of connecting members connecting a side of the outer disc (31, 231, 331) remote from the rotor (20) and a side of the inner disc (33, 233, 333) remote from the rotor (20); and
an elastic body (230c, 330c) held between an inner peripheral surface (231m, 331m) of the outer disc (231, 331) and an outer peripheral surface (233m, 333m) of the inner disc (233, 333).

11. An electromagnetic clutch (1) according to claim 10, wherein each of the connecting members comprises a plate member (260, 342), and rivets (218, 219; 315, 316) connecting the plate member (260, 342) to the outer disc (231, 331) and the inner disc (233, 333), respectively.

12. An electromagnetic clutch (1) according to claim 10 or 11, wherein each of the connecting members comprises a portion (342) of each of the spring members (340), and rivets (315, 316) connecting the portion (342) of each spring member to the outer disc (331) and the inner disc (333), respectively.

13. An electromagnetic clutch (1) according to claim 10, 11, or 12, wherein at least one of the inner peripheral surface (231m, 331m) of the outer disc (231, 331) and the outer peripheral surface (233m, 333m) of the inner disc (233, 333) has a circumferential groove (231n, 233n; 331n, 333n) formed therein.

14. An electromagnetic clutch (1) according to any of claims 10 to 13, wherein the elastic body (230c, 330c) is held in a compressed state.

15. An electromagnetic clutch according to any of claims 10 to 14, wherein the elastic body (230c, 330c) is formed of rubber.
